# EUROPEAN PATENT SPECIFICATION

(11) **EP 2 473 248 B1**
(45) Date of publication and mention of the grant of the patent: **29.04.2015**
(21) Application number: 10757300.8
(22) Date of filing: 31.08.2010
(51) Int. Cl.: B01D 29/60, B01D 35/153, B01D 29/96

(54) **FILTER ARRANGEMENT**
FILTEREINRICHTUNG
DISPOSITIF DE FILTRE

(30) Priority: 02.09.2009 NL 2003427
(43) Date of publication of application: 11.07.2012
(73) Proprietor: Parker Hannifin Manufacturing Netherlands (Filtration) B.V., 6827 BV Arnhem (NL)
(72) Inventor: VAN BOVEN, Marinus Johannes Berend, NL-6708 RX Wageningen (NL)
(74) Representative: EP&C
(86) International application number: PCT/NL2010/050541
(87) International publication number: WO 2011/028106

(56) References cited:
- EP-A2- 0 534 672
- WO-A1-01/58566
- US-A- 3 802 564

## Description

### FIELD OF THE INVENTION

The present invention relates to a filter arrangement. In particular the invention relates to a filter arrangement that can be used together with a filter for filtering material from a fluid stream of hydraulic fluid.

### BACKGROUND OF THE INVENTION

Filter arrangements are commonly known and may be used to filter fluid media, such as gasses or liquids. In particular filter arrangements are used in the field of hydraulics, for example in hydraulic systems used in heavy duty equipment such as heavy duty diggers, bulldozers. Other applications include general hydraulic systems, fuel systems and engine lubrication systems. Application of filter arrangements for filtering gaseous media are also known. Filter arrangements often employ replaceable filter elements that can be inserted in a filter chamber. The filter elements are designed to filter the fluid flowing between inlet and outlet ports in the filter head. The filter element can also be a so-called spin-on filter in which the filter chamber is a can that is in its entirety attachable to the fluid system and which is discarded along with the filter element upon replacement thereof. In other arrangements, only the filter element is replaced and the filter chamber is reused. Known filter arrangements may include so-called duplex filter arrangements in which two or more filter elements are used that are in parallel arrangement with respect to each other.

During use the filter element may become clogged to the point that it causes a problem in the system, such as inadequate flow to components downstream of the filter, excessive pressure upstream of the filter element, and/or damage to the filter element allowing the accumulated contaminants to flow to components downstream of the filter element. Normally this is avoided by scheduled replacement of the filter element, or after the need for replacement has been brought to the attention of the operator of the system, which may be in the form of an alarm issued by the fluid system for example. It is thus necessary to replace the filter element from time to time. Furthermore, seals and/or other re-useable components of the filter arrangement may be damaged by pressure changes.

Document EP 0 534 672 A2 discloses a filter arrangement (Fig 1) comprising a filter element, an inlet for fluid and an inlet passage which passes fluid to the filter element and an outlet passage conveying filtered fluid from the element to an outlet. The inlet passage includes a valve which can close the inlet passage. When this happens, a bypass valve opens and connects the inlet direct to the outlet. An anti-back-flow valve is provided in the outlet passage to prevent fluid passing back down the outlet passage to the filter element. The filter element can then be changed. A re-pressurization valve is provided to pass fluid to the element while the inlet passage is still closed and a vent port vents air from the element during this re-pressurization. Once re-pressurization is complete, the vent port and the re-pressurization valve are closed and the inlet valve opened so that filtration recommences

A problem with known filter arrangements, in particular filter arrangements for filtering hydraulic fluids, when replacing the filter element is that the pressure of the system present must be allowed to drop to levels at which it is safe for a person to replace the filter element and to remove it from the filter arrangement.

A further problem of known filter arrangements, in particular filter arrangements used for heavy duty hydraulic applications, is related to the relatively high pressures needed in such applications. Such applications are for example hydraulic systems for heavy duty machinery such as bulldozers or heavy duty cranes. When a filter element is replaced, the pressure the filter element is exposed to will inevitably vary between a low pressure when it is removed from the arrangement and a high working pressure, in particularly for said heavy duty hydraulic systems, during use. Although the filter elements are designed to withstand working pressure of course, the sudden change in pressure, either a sudden rise or a sudden drop in pressure, may cause damage to the filter element or reduce its life expectancy. This is in particular true for said hydraulic applications.

The above concerns are also applicable to duplex filter arrangements in which the operation of the duplex filter arrangement is not interrupted when one of the filter elements is replaced. In such an arrangement the other filter element will take from the filter element that is being replaced.

### OBJECT OF THE INVENTION

It would therefore be desirable to provide a filter arrangement of the above-mentioned type that solves one or more of the aforementioned pressure problems which occur when replacing a filter element.

### SUMMARY OF THE INVENTION

To better address one or more of these concerns, according to a first aspect of the invention there is provided a filter arrangement according to claim 1, which can according to dependent claim 6 take the form of a duplex filter arrangement.

The filter arrangement according to the first aspect of the present invention provides that when the valve control member is positioned in its first position, the pressure at the inlet of the arrangement is fed to the control side of the first valve and thus closes the first valve. At the same time the outlet of the first valve is connected to the reservoir. On the other hand, when the valve control member is positioned in its second position the pressure at the inlet of the arrangement is fed to the control side of the second valve and thus closes the second valve. At the same time the outlet of the second valve is connected to the reservoir. Hence, the outlets of the filter chambers are connected with the reservoir via the valve control member when the respective valves are in their closed positions, and thus the filter chambers will be connected to the reservoir. As the reservoir has a lower pressure than a working pressure of the filter arrangement the pressure will automatically drop to the level of the pressure in the reservoir once the valve is closed.

According to this aspect of the invention a duplex filter arrangement is provided in which two (or more) filters can be used, while it is possible to replace at least one filter during use of the filter arrangement. This is achieved by the valve control member that is designed to provide a control fluid connection between a control side of the first valve and the inlet so as to position the first valve in the closed position and to provide a control fluid connection between a control side of the second valve and a low pressure reservoir for fluid so as to position the second valve in the open position, and vice versa. Hence, always one filter chamber is accessible for fluid flow.

In particular it is achieved that the valve control member connects the first filter chamber to the reservoir when the first valve is in the closed position, respectively connects the second filter chamber to the reservoir when the second valve is in the closed position. In this manner that filter chamber that contains a filter element that needs replacement is connected to the low pressure of the reservoir.

In an embodiment the first fluid line is in fluid communication with the second fluid control line, and the second fluid line is in fluid communication with the first fluid control line, wherein a non-return valve is provided in each of said first and second fluid lines said non-return valve prohibiting fluid flow from the valve control member towards the respective outlets of the filter chambers. By providing said fluid connection it is achieved that when the fluid flow is changed from one filter chamber to the other, that the change in pressure in said filter chambers is gradual and sudden and very fast changes in pressure are avoided. This increases the life of the filter elements used, in particular in high-pressure applications.

In an embodiment an expansion valve is provided in the first and second fluid lines, which throttles the fluid flow through said fluid lines and thus avoids that the pressure in the filter chambers will drop to the pressure level of the reservoir in a sudden manner, respectively will rise in a sudden manner to the pressure at the inlet of the arrangement. Preferably the expansion valve is provided upstream of said non-return valve provided in each of said first and second fluid lines.

Hence, the provision of the expansion valve ensures a gradual change in the pressure in the filter chambers and hence ensures a gradual drop or rise in pressure that is experienced by a filter element that is inserted in the respective filter chambers. Furthermore, this also ensures that any seals that may be present in the filter chamber are not damaged by rapid changes in pressure.

In an embodiment an expansion valve is provided in each of said first and second fluid control line between the valve control member and said first and second valves, preferably downstream of a junction in first and second fluid control line in a branch line that provides a fluid connection between said junction and said first and second valves respectively. In a similar manner as described above, the provision of an expansion valve in the fluid connection between the valve control member and said first and second valves will ensure that as soon as a fluid connection between a valve and the inlet of the filter arrangement is established by the valve control member the flow towards that valve is throttled thus ensuring that there is a gradual increase in the pressure that is experienced by the filter element inserted in the filter chamber when that valve is opened. An expansion valve is in fact a flow restriction for a flowing fluid.

### BRIEF DESCRIPTION OF THE DRAWINGS

Further advantageous embodiments of a filter arrangement according to the present invention are described in the claims and in the following description with reference to the drawing, in which:
- Fig. 1: shows a duplex filter arrangement according to the invention;
- Fig. 2: shows the filter arrangement of Fig.1 in a different flow configuration;
- Fig. 3: shows a further filter arrangement according to the invention;
- Fig. 4: shows the filter arrangement of Fig.3 in a different flow configuration, and
- Fig. 5: shows the filter arrangement of Fig.1 and 2 with an additional valve.

### DETAILED DESCRIPTION OF EXAMPLES

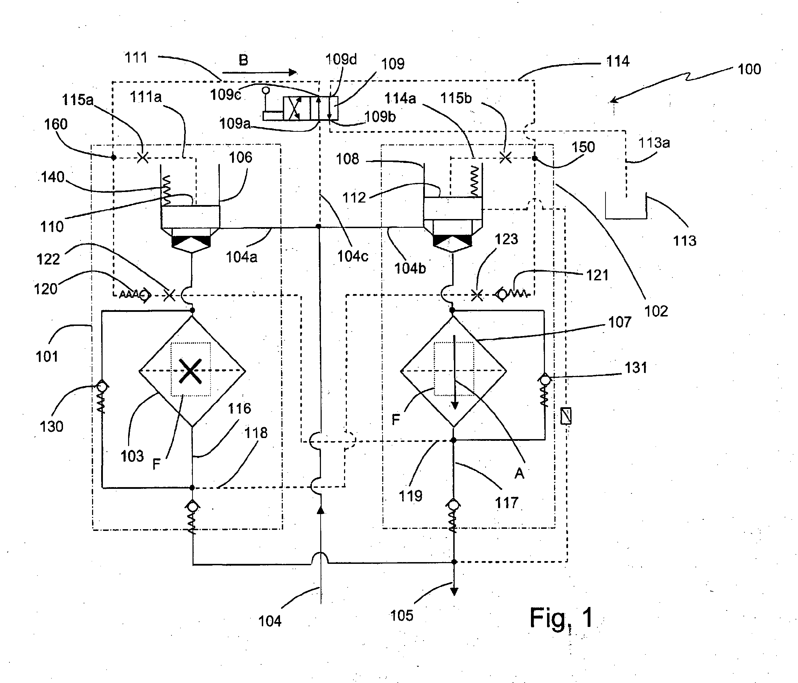

Figure 1 shows a filter arrangement 100 that is for example used in a hydraulic fluid system. The filter arrangement 100 is a so-called duplex filter arrangement in which multiple, in the example of Figure 1 two, flow circuits are provided. In Figure 1 it can be seen that the filter arrangement 100 comprises a first flow circuit 101 and a second flow circuit 102.

The first flow circuit 101 comprises a first filter chamber 103 located between an inlet 104 and an outlet 105 of the filter arrangement 100 and in which a filter element (F) can be inserted. In the schematic drawing of Figure 1 the filter chamber 103 and the filter element F are only schematically shown for ease of representation. The first flow circuit 101 further comprises a first valve 106 which is located between the first filter chamber 103 and the inlet 104 of the filter arrangement 100. The first valve 106 is moveable between a closed position in which fluid flow to the first filter chamber 103 is blocked and an open position in which fluid can flow to the first filter chamber 103 and consequently to the outlet 105. In the example of Figure 1, and which will be explained in more detail below, the first valve 106 is in its closed position as is indicated by a cross in the first filter chamber 103 indicating that no fluid is flowing through the filter element F in the first filter chamber 103. In the example of Figure 1 the first valve 106 is a cartridge valve which is not part of the filter element F or first filter chamber 103.

The second flow circuit 102 comprises a second filter chamber 107 located between the inlet 104 and the outlet 105 of the filter arrangement 100 and in which a filter element F can be inserted. In the schematic drawing of Figure 1 the filter chamber 107 and the filter element are only schematically shown for ease of representation. The second flow circuit 102 further comprises a second valve 108 which is located between the second filter chamber 107 and the inlet 104 of the filter arrangement 100. The second valve 108 is moveable between a closed position in which fluid flow to the second filter chamber 107 is blocked and an open position in which fluid can flow to the second filter chamber 107 and consequently to the outlet 105. In the example of Figure 1, and which will be explained in more detail below, the second valve 108 is in its open position as is indicated by an arrow next to the second filter chamber 107 indicating that fluid is flowing through the filter element F in the second filter chamber 107. In the example of Figure 1 the second valve 108 is a cartridge valve which is not part of the filter element F or second filter chamber 107.

It is noted that the first flow circuit 101 and the second flow circuit 102 are identical. Consequently, what will be described with respect to one of the flow circuits 101, 102 is also applicable to the other flow circuit.

The advantage of a duplex filter arrangement in comparison with a filter arrangement having only a single filter element is that with a duplex filter arrangement it is possible to replace a filter element, for example when it has become clogged, without interrupting the operation of the fluid system the filter arrangement is coupled to. This is achieved by switching, either manually or automatically between both flow circuits. This is controlled by a valve control member 109, in the example of Figure 1 a 4-2 way valve. In the example of Figure 1, the valve control member 109 provides a fluid connection between a control side 110 of the first valve 106 and the inlet 104, via main branch line 104c, of the filter arrangement 100 by connecting the inlet 104 to a first fluid control line 111 and a branch line 111a thereof. Fluid control line 111 and its branch line 111a are not main flow line, i.e. the fluid control line 111 and branch line 111 a are only used as control line or control connections to operate the first valve 106. In the example of Figure 1 the valve control member 109 has provided a connection between the control side 110 of the first valve 106 and the inlet 104. The control side 110 of the first valve 106 is a plunger having a surface on which the fluid pressure in the fluid control line 111 acts. The pressure of the fluid entering the filter arrangement 100 at the inlet 104 is main or system pressure and constitutes the highest pressure in the fluid system. The system pressure is also present in the fluid control line 111 (and its branch line 111 a).

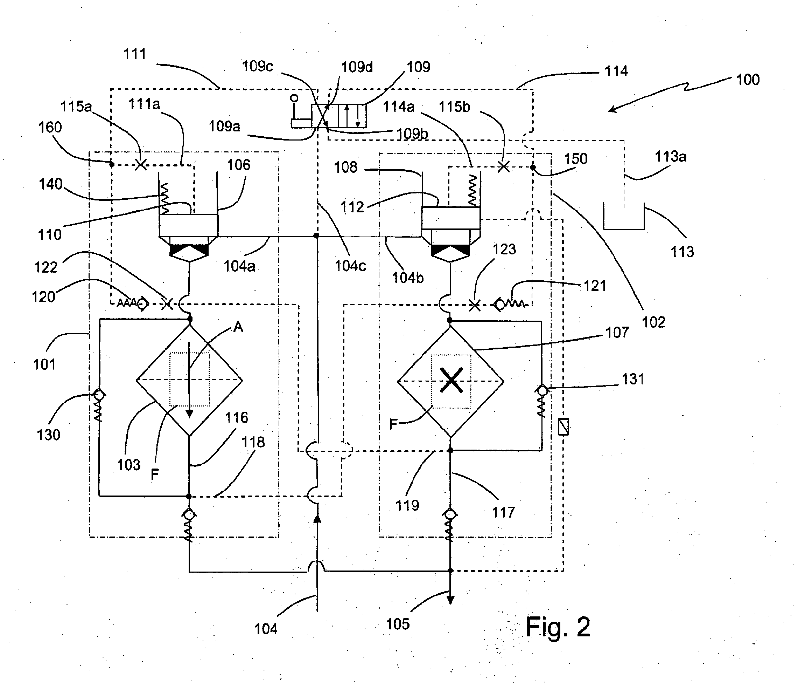

More in particular the valve control member 109 comprises an inlet port 109a, an outlet port 109b, a first control port 109c and a second control port 109d. The valve control member 109 is positionable in a first position providing a fluid connection between the inlet port 109a and the first control port 109c, and between the outlet port 109b and the second control port 109d. This situation is shown in Figure 1. Alternatively, the valve control member 109 can be positioned in a second position by moving the valve control member 109 in a direction indicated with arrow B in Figure 1, the second position of the valve control member 109 being shown in Figure 2. In this second position a fluid connection is provided between the inlet port 109a and the second control port 109d, and between the outlet port 109b and the first control port 109c.

Between the inlet 104 and the valve control member 109 a control fluid inlet line 104c extends, such that control fluid having a pressure equal to the pressure at the inlet 104 can be used in the filter arrangement to operate the first and second valve. Between the outlet port 109b and a low pressure reservoir 113 for fluid a control fluid outlet line 113a extends.

The inlet 104 comprises two main branch lines 104a and 104b leading to the first valve 106 respectively to the second valve 108. The pressure in both main branch lines 104a, 104b is equal to the system pressure of the inlet 104.

Main branch line 104a is connected to the first valve 106 and the fluid pressure in the main branch line 104a also acts on the plunger in the first valve 106. In practice the first valve 106 is designed such, that the plunger (the control side 110) has two differently sized surface areas that are exposed to the pressures in the branch lines that are connected to it. In the example of Figure 1 the surface area of the plunger 110 that is exposed to the pressure in the branch line 111 a is larger than the surface area of the plunger 110 that is exposed to the pressure in the main branch line 104a. As said pressures are (substantially) equal the resultant force acting on the plunger 110 of the first valve 106 will bias the plunger 110, and with it the first valve 106, in its closed position. It is also possible that the first valve 106 comprises an additional member such as a spring 140 that biases the plunger 110 into the closed position.

In the example of Figure 1 the valve control member 109 is positioned such that the first valve 106 is in its closed position as has been explained above. With respect to the second valve 108 as part of the second flow circuit 102 it can be seen in Figure 1, that the valve control member 109 provides a fluid connection between a control side 112 of the second valve 108 and the reservoir 113 for fluid by connecting the reservoir 113 to a second fluid control line 114 and a branch line 114a thereof. The reservoir 113 is used for collecting fluid and has the lowest pressure in the system. Preferably, the pressure in the reservoir 113 is equal to the ambient or atmospheric pressure. The second fluid control line 114 and its branch line 114a are, similarly to what has been described above, not a main flow line, i.e. the fluid control line 114 and branch line 114a are only used as control line or control connections to operate the second valve 106. The second valve 108 is of similar, preferably the same, design as the first valve 106.

As the system pressure is present in the main branch line 104b, there exists a pressure difference over the control side or plunger 112 of the second valve 108. In fact, the pressure in the branch line 114a is equal to the pressure in the reservoir 113. This in turn means that the resultant force exerted on the plunger 112 will position the second valve 108 in its open position. This position is shown in Figure 1 and allows fluid to flow through the filter element F that is inserted in the second filter chamber 107. This is indicated by means of arrow A next to the second filter chamber 107.

Switching between the first flow circuit 101 and the second flow circuit 102 can be easily achieved by operating the valve control member 109. In the example of Figure 1 the fluid flow can be diverted to the first flow circuit 101 by moving the valve control member 109 (manually or automatically) in a direction indicated by means of arrow B. This will result in the first fluid control line 111 being connected to the reservoir 113 as the first control port 109c and the outlet port 109b are connected in the second position of the valve control member 109, and will result in the second fluid control line 114 being connected to the inlet 104 as in said position of the valve control member 109 the inlet port 109a and the second control port 109d are connected. The change in respective pressures at the control sides 110, 112 of the respective valves 106, 108 will result in the opening of the first valve 106 and the closing of the second valve 108. This situation is shown in Figure 2.

In particular when the filter arrangement 100 is used in a hydraulic system, more in particular in a hydraulic system for heavy duty machinery, the difference between the system pressure and the pressure in the reservoir 113 may be substantial. A common system pressure at the inlet 104 of the filter arrangement 100 for such heavy duty applications equals for example about 350 bar. The effect of this large pressure difference between the reservoir and the system pressure at the inlet 104 is, that a filter element F that is inserted in its respective filter chamber will experience a large change in pressure when the respective valve is opened or closed. If this change is pressure is sudden, or takes place in a relatively short period of time, the filter element may very easily be damaged by the change in pressure.

A solution to avoid that such a sudden increase in pressure may damage the filter element in question can be achieved by allowing the pressure to increase in a more gradual manner. According to a first aspect of the present invention this is achieved by providing an expansion valve in the respective branch lines. An expansion valve in a fluid flow line acts as a flow restriction for that fluid and results in a pressure drop in that fluid. In the example of Figure 1 it can be seen that a first expansion valve 115a is provided in the branch line 111a and that a second expansion valve 115b is provided in the branch line 114a. The effect of the expansion valves 115a, 115b is, that the system pressure will only gradually build up when the valves 106, 108 are opened, respectively will only gradually decrease when the valves 106, 108 are closed. Preferably the expansion valves 115a, 115b are adjustable in that the amount of expansion can be adjusted to meet specific requirements as to the time period in which the pressure in the filter chambers 103, 107 builds up respectively decreases.

According to a further aspect of the invention, which further aspect can be used in combination with the aforementioned aspect and can be used independently thereof, the problem with known filter arrangements, that the pressure of the system present in a filter chamber must be allowed to drop to levels at which it is safe for a person to replace the filter element and to remove it from the filter arrangement, is addressed. As can be seen in Figure 1, each filter chamber 103, 107 comprises a filter chamber outlet 116 and 117 respectively. Between the outlet 116 of the first filter chamber 103 and the valve control member 109, in particular the second control port 109d thereof, a first fluid line 118 is provided. Similarly a second fluid line 119 is provided between the outlet 117 of the second filter chamber 107 and the valve control member 109, in particular the first control port 109c thereof. As explained above, the valve control member 109 is designed to provide a fluid connection between said first fluid line 118 and the reservoir 113 when the first valve 106 is in the closed position (shown in Figure 1), respectively between said second fluid line 119 and the reservoir 113 when the second valve 108 is in the closed position (shown in Figure 2). When the valve control member 109 is operated so as to close valve 106 as shown in Figure 1, there will be no flow through the first filter chamber 103 and its outlet 116 will be in fluid connection with the reservoir 113. As the reservoir 113 has the lowest pressure level in the filter system, the fluid pressure in the filter chamber 103 will level with the pressure in the reservoir 113 which is preferably equal to the ambient pressure, making it safe for a person to replace the filter in the filter chamber. Furthermore, by providing a fluid line between the respective outlets of the filter chambers and the reservoir, an automatic pressure equalization is obtained.

Furthermore, the first fluid line 118 is in fluid communication with the second fluid control line 114 at junction 150. Similarly, the second fluid line 119 is in fluid communication with the first fluid control line 111 at junction 160. By providing said fluid connection it is achieved that when the fluid flow is changed from one filter chamber to the other, the change in pressure in said filter chambers is gradual and sudden and very fast changes in pressure are avoided. The gradual change in pressure is for example visible, when the fluid flow is diverted from the first filter chamber 103 to the second filter chamber 107. What happens in that situation is, that the pressure in the first fluid control line 111 increases to the inlet pressure and (almost) at the same time the pressure in the second fluid control line 114 decreases to the reservoir pressure. As the pressure at the outlet 116 of the first filter chamber 103 is (substantially) higher than the reservoir pressure present in the second fluid control line 114, control fluid will flow through the first fluid line 118 and consequently to the control side 112 of the second valve 108 and to the reservoir 113. This means in practice, that the pressure in the second fluid control line 114 will not decrease instantly but only gradually as the pressure in the first fluid line 118 must be allowed to drop. The same is of course true when switching from the second filter chamber 107 to the first filter chamber 103.

To avoid that the (high) system pressure of the fluid at the inlet 104 can reach the outlet 116, 117 of the respective filter chambers 103, 107 non-return flow valves 120, 121 are provided in the respective fluid lines 119 and 118 respectively. To further improve the working of the filter arrangement 100 further expansion valves 122, 123 are provided between the outlet 119 of the second filter chamber 107 and the non-return valve 120, respectively between the outlet 118 of the first filter chamber 103 and the non-return valve 121. In fact, the expansion valves 122, 123 are each provided upstream of the respective non-return flow valves 120, 121. In particular the expansion valves 122, 123 provided in the first and second fluid lines 118, 119 ensure that the pressure in said fluid lines changes gradually. The specific location of the expansion valves 122, 123 upstream of the non-return flow valves 120, 121 ensures a smooth opening and closing thereof. Hence, a gradual opening and closing of the first and second valve is achieved.

Preferably the first flow circuit 101 and the second flow circuit 102 each comprise a first bypass flow valve 130 and second bypass flow valve 131 respectively which ensure that fluid flow will always be possible in case the filter chambers are not operable.

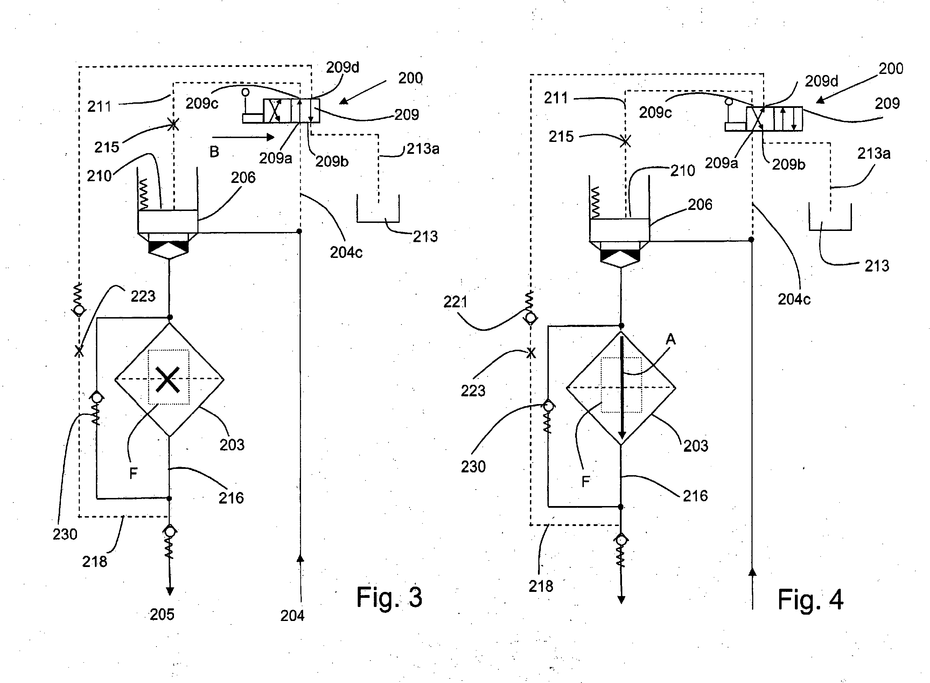

In the above examples several aspects of the invention have been described with reference to a so-called duplex filter arrangement. It is noted however that certain aspects of the present invention, in particular the first aspect thereof, are also applicable and advantageous when used in a filter arrangement that comprises only a single filter chamber or single filter element. This will be described with reference to Figures 3 to 4.

Figure 3 and Figure 4 show a filter arrangement 200 which, similarly to the embodiment of Figures 1 and 2, comprises a filter chamber 203, a valve 206 of similar design as the valve 106, an inlet 204, an outlet 205 and a valve control member 209 arranged between the inlet 204 and the valve 206. The filter arrangement 200 operates in mainly the same manner as the filter arrangement 100 and reference is made to the description thereof. In the example of Figure 3 the valve 206 is in its closed position, i.e. the fluid control line 211 is open to the inlet 204 as the first control port 209c of the valve control member 209 is connected to the inlet port 209a thereof, and the fluid line 218 located between the outlet 216 of the valve 206 and the valve control member 209 is in fluid communication with the reservoir 213 as the second control port 209d is connected to the outlet port 209b of the valve control member 209. In this situation there is no fluid flow to the filter chamber 203 and consequently no fluid flow through the filter arrangement 200. Operating the valve control member 209 by moving it to its second position in the direction of arrow B will position the valve control member 209 into the position shown in Figure 4, which corresponds to the position shown in Figure 2.

Similar to what has been described above, the control side 210 of the valve 206 will be brought into fluid communication with the reservoir 213 via the control fluid outlet line 213a and consequently the valve 206 will open, allowing fluid to flow into the filter chamber 203. At the same time, non-return valve 221 blocks flow from the valve control member 209 towards the outlet 216 of the filter chamber and towards the outlet 205.

In order to gradually expose the filter element F inserted in the filter chamber 203 to the changing pressure when opening and/or closing the valve 206, again an expansion valve 215 is provided between the valve control member 209 and the valve 206 in the fluid control line 211.

The filter arrangement 200 may also be provided with a bypass flow valve 230 so that the filter chamber 203 can be bypassed in case the filter element has become clogged. Further, the fluid line 218 may be provided with an expansion valve 223, similarly as has been discussed with reference to Figure 1 so that the pressure in the filter chamber 203 will gradually decrease when the valve 206 is being closed.

Hence, with reference to Figures 3 and 4 a filter arrangement 200 is provided which, comprises an inlet 204 and an outlet 205, a filter chamber 203 located between the inlet 204 and the outlet 205, and in which a filter element F can be inserted. The arrangement 200 further comprises a valve 206 located between the inlet 204 and the filter chamber 203, the valve 206 being moveable between a closed position in which fluid flow to the filter chamber 206 is blocked and an open position in which fluid can flow to the filter chamber 206. Further, a valve control member 209 designed to provide a control fluid connection 211 between the valve 206 and the inlet 104 of the filter arrangement 200 is provided. Between the valve control member 209 and the valve 206 an expansion valve 215 is provided.

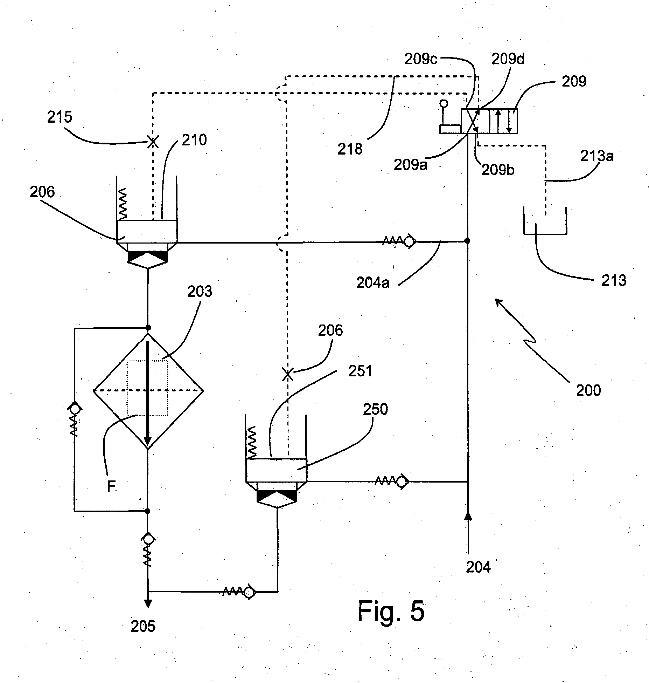

In certain applications it is not allowed to block fluid flow through the filter / arrangement when the filter element is under replacement. Such applications are for example the hydraulic steering of a ship or large freight carriers. A first solution in such situations is the provision of the above described duplex filter arrangement. It is however also possible to provide a less complicated and thus less expensive solution in which aspects of the present invention are also implemented. Such an embodiment is shown in Figure 5 in which the filter arrangement 200 of Figure 4 is shown, but in which the non-return flow valve 221 in the fluid line 218 has been replaced by a further valve 250 that is designed to establish a direct fluid connection between the inlet 204 and the outlet 205 in case the further valve 205 is in an open position. In the situation of Figure 5, the first valve 206 is in its open position and fluid flows through the filter chamber 203. In particular the inlet port 209a is connected to the second control port 209d and the outlet port 209b is connected to the first control port 209c of the valve control member 209. Hence, the control side 210 of the first valve 206 is in fluid communication with the reservoir 213 via control fluid outlet line 213a and the system pressure of the fluid at the inlet 204 presses the first valve 206 open via fluid line 204a. Correspondingly; the fluid pressure of the inlet 204 acts on the further valve 250 via fluid line 218 in a manner similar as described with respect to Figure 1. Consequently, the further valve 250 is closed and no fluid will flow through it.

Manipulating the valve control member 209 (either manually or automatically) will establish a fluid connection between the control side 251 of the further valve 250 and the reservoir 213 on the one hand and a fluid connection between the inlet 204 and the control side 210 of the first valve 206 (see above). Hence, the first valve 206 will assume its closed position and the further valve 250 will assume its open position allowing fluid to flow through the further vale 250 directly from the inlet 204 to the outlet 205 of the filter arrangement. Hence, in this situation the fluid will not pass through the filter chamber 203 and consequently not through the filter element inserted in it and the fluid is allowed to flow through the filter arrangement unfiltered. Further to the provision of the expansion valve 215 a further expansion valve 260 may be provided between the valve control member 209 and the further valve 250.

In the above examples the filter arrangements comprise two valves, said two valves are shown to be separate valves. It is however possible that said two valves are arranged on a common support, preferably adjacent to each other, or for example in a single valve housing that houses both filter chambers. It is also possible that these valves are designed as double-working valves.

It is noted here that in the above description of certain examples of the invention only a single reservoir has been depicted, but that it is very well possible that multiple reservoirs are provided.

The duplex filter arrangement according to the invention can also be phrased as indicated in the next following clauses 1-8:
1] A duplex filter arrangement (100), comprising:
   - a first flow circuit (101);
   - a second flow circuit (102) arranged in parallel with the,first flow circuits (101);
   - an inlet (104) and an outlet (105) in fluid communication with the first (101) and second flow circuit (102),
   the first flow circuit (101) comprising:
   - a first filter chamber (103) located between the inlet (104) and the outlet (105), and in which a filter element (F) is insertable;
   - a first valve (106) located between the first filter chamber (103) and the inlet (104), the first valve (106) being moveable between a closed position in which fluid flow from the inlet (104) to the first filter chamber (103) is blocked and an open position providing a fluid connection between the inlet (104) and the first filter chamber (103),
   the second flow circuit (102) comprising:
   - a second filter chamber (107) located between the inlet (104) and the outlet (105), and in which a filter element (F) is insertable;
   - a second valve (108) located between the second filter chamber (107) and the inlet (104), the second valve (108) being moveable between a closed position in which fluid flow from the inlet to the second filter chamber (107) is blocked and an open position providing a fluid connection between the inlet and the second filter chamber (107),
   wherein the arrangement further comprises:
   - a valve control member (109) comprising an inlet port (109a), an outlet port (109b), a first control port (109c) and a second control port (109d), the valve control member (109) being positionable in a first position providing a fluid connection between the inlet port (109a) and the first control port (109c), and between the outlet port (109b) and the second control port (109d), and in a second position providing a fluid connection between the inlet port (109a) and the second control port (109d), and between the outlet port (109b) and the first control port (109c);
   - a control fluid inlet line (104c) providing a fluid connection between the inlet (104) and the inlet port (109a) of the valve control member (109);
   - a control fluid outlet line (113a) providing a fluid connection between the outlet port (109b) and a low pressure reservoir (113) for fluid;
   - a first fluid control line (111) providing a fluid connection between the first control port (109c) and a control side (110) of the first valve (106), and
   - a second fluid control line (114) providing a fluid connection between the second control port (109d) and a control side (112) of the second valve (108),
   wherein the filter arrangement further comprises a first fluid line (118) provided between an outlet (116) of the first filter chamber (103) and the second control-port (109d) of the valve control member (109) providing a fluid connection there between, and a second fluid line (119) provided between an outlet (117) of the second filter chamber (107) and the first control port (109c) valve control member (109) providing a fluid connection there between.
2] The duplex filter arrangement (100) according to clause 1, wherein the first fluid line (118) is in fluid communication with the second fluid control line (114), and wherein the second fluid line (119) is in fluid communication with the first fluid control line (111), wherein a non-return valve (120, 121) is provided in each of said first and second fluid lines (118, 119) said non-return valve (120, 121) prohibiting fluid flow from the valve control member (109) towards the respective outlets (116, 117) of the filter chambers (103, 107).
3] The duplex filter arrangement (100) according to clause 1 or 2, wherein an expansion valve (122, 123) is provided in each of the first and second fluid lines (118, 119), preferably upstream of said non-return valve (120, 121) provided in each of said first and second fluid lines (118, 119).
4] The duplex filter arrangement (100) according to any of the previous clauses, wherein an expansion valve (115a, 115b) is provided in each of said first and second fluid control line (111, 114) between the valve control member (109) and said first and second valves (106, 108), preferably downstream of a junction (150, 160) in first and second fluid control line (114, 111) in a branch line (114a, 111a) that provides a fluid connection between said junction (160, 150) and said first and second valves (106, 108) respectively.
5] The duplex filter arrangement (100) according to any of the previous clauses, wherein the valve control member (109) is one of a manual control member and an electronic control member.
6] The duplex filter arrangement (100) according to any of the previous clauses, wherein the first and second valve (106, 108) are cartridge valves.
7] The duplex filter arrangement (100) according to any of the previous clauses, wherein the first and second valve (106, 108) are arranged on a common support, preferably adjacent to each other.
8] The duplex filter arrangement according to any of the previous clauses, wherein said reservoir (113) is maintained at a pressure that is substantially equal to atmospheric pressure.
   Otherwise, the filter arrangement according to the invention can also be phrased as indicated in the next following clauses 9-15:
9] A filter arrangement (200), comprising:
   - an inlet (204) and an outlet (205);
   - a filter chamber (203) located between the inlet (204) and the outlet (205), and in which a filter element (F) is insertable;
   - a valve (206) located between the inlet (204) and the filter chamber (203), the valve (206) being moveable between a closed position in which fluid flow from the inlet (204) to the filter chamber (206) is blocked and an open position providing a fluid connection between the inlet (204) and the filter chamber (206), and
   - a valve control member (209) comprising an inlet port (209a), an outlet port (209b), a first control port (209c) and a second control port (209d), the valve control member (209) being positionable in a first position providing a fluid connection between the inlet port (209a) and the first control port (209c), and between the outlet port (209b) and the second control port (209d), and in a second position providing a fluid connection between the inlet port (209a) and the second control port (209d), and between the outlet port (209b) and the first control port (209c);
   - a control fluid inlet line (204c) providing a fluid connection between the inlet (204) and the inlet port (209a) of the valve control member (209);
   - a control fluid outlet line (213a) providing a fluid connection between the outlet port (209b) and a low pressure reservoir (213) for fluid, and
   - a fluid control line (211) providing a fluid connection between the first control port (209c) and a control side (210) of the first valve (206), and
   wherein the filter arrangement further comprises a fluid line (218) provided between an outlet (216) of the filter chamber (203) and the second control port (109d) of the valve control member (209), providing a fluid connection there between.
10] The filter arrangement (200) according to clause 9, wherein a non-return valve (221) is provided in the fluid line (218) that prohibits fluid flow from the valve control member (209) towards the outlet (216) of the filter chamber.
11] The filter arrangement (200) according to clause 9 or 10, wherein an expansion valve (223) is provided in the fluid line (218), preferably upstream of said non-return flow valve (221) in said fluid line (218).
12] The filter arrangement (200) according to any of clauses 9 to 11, wherein an expansion valve (215) is provided between the valve control-member (209) and the valve (206) in said fluid control line (211).
13] The filter arrangement (200) according to any of clauses 9 to 12, wherein the valve control member (209) is one of a manual control member and an electronic control member.
14] The filter arrangement (200) according to any of clauses 9 to 13, wherein the valve (206) is a cartridge valve.
15] The filter arrangement (200) according to any of clauses 9 to 14, wherein the reservoir (213) is maintained at a pressure that is substantially equal to atmospheric pressure.

## Claims

1. A filter arrangement (100; 200), comprising:
• an inlet (104; 204) and an outlet (105; 205);
• a first filter chamber (103; 203) located between the inlet (104; 204) and the outlet (105; 205), and in which a first filter element (F) is insertable;
• a first valve (106; 206) located between the inlet (104; 204) and the first filter chamber (103; 203), the first valve (106; 206) being moveable between a closed position in which fluid flow from the inlet (104; 204) to the first filter chamber (103; 203) is blocked and an open position providing a fluid connection between the inlet (104; 204) and the first filter chamber (103; 203), and
• a valve control member (109; 209) comprising an inlet port (109a; 209a), an outlet port (109b; 209b), a first control port (109c; 209c) and a second control port (109d; 209d), the valve control member (109; 209) being positionable in a first position providing a fluid connection between the inlet port (109a; 209a) and the first control port (109c; 209c), and between the outlet port (109b; 209b) and the second control port (109d; 209d), and in a second position providing a fluid connection between the inlet port (109a; 209a) and the second control port (109d; 209d), and between the outlet port (109b; 209b) and the first control port (109c; 209c);
• a control fluid inlet line (104c; 204c) providing a fluid connection between the inlet (104; 204) and the inlet port (109a; 209a) of the valve-control member (109; 209);
• a control fluid outlet line (113; 213a) providing a fluid connection between the outlet port (109b; 209b) and a low pressure reservoir (113; 213) for fluid, and
• a first fluid control line (111; 211) providing a fluid connection between the first control port (109c; 209c) and a control side (110; 210) of the first valve (106; 206), and
wherein the filter arrangement further comprises a first fluid line (118; 218) provided between an outlet (116; 216) of the first filter chamber (103; 203) and the second control port (109d; 209d) of the valve control member (109; 209), providing a fluid connection there between.

2. The filter arrangement (100; 200) according to claim 1, wherein a first non-return valve (121; 221) is provided in the first fluid line (218) said first non-return valve (121; 221) prohibiting fluid flow from the valve control member (109; 209) towards the outlet (116; 216) of the first filter chamber (103; 203).

3. The filter arrangement (100; 200) according to claim 1 or 2, wherein a first expansion valve (123; 223) is provided in the first fluid line (118; 218), preferably upstream of said first non-return flow valve (121; 221) in said first fluid line (118; 218).

4. The filter arrangement (200) according to one of the preceeding claims, wherein a first expansion valve (115a; 215) is provided between the valve control member (209) and the first valve (106; 206) in said first fluid control line (111; 211).

5. The filter arrangement (200) according to one of the proceeding claims, wherein the first valve (106; 206) is a cartridge valve.

6. The filter arrangement (100) according to one of the proceding claims comprising:
• a first flow circuit (101);
• a second flow circuit (102) arranged in parallel with the first flow circuit (101);
wherein the inlet (104) and the outlet (105) are in fluid communication with the first (101) and second flow circuit (102),
the first flow circuit (101) comprising:
• said first filter chamber (103);
• said first valve (106),
the second flow circuit (102) comprising:
• a second filter chamber (107) located between the inlet (104) and the outlet (105), and in which a second filter element (F) is insertable;
• a second valve (108) located between the second filter chamber (107) and the inlet (104), the second valve (108) being moveable between a closed position in which fluid flow from the inlet to the second filter chamber (107) is blocked and an open position providing a fluid connection between the inlet and the second filter chamber (107), wherein the arrangement further comprises:
• a second fluid control line (114) providing a fluid connection between the second control port (109d) and a control side (112) of the second valve (108), and
• a second fluid line (119) provided between an outlet (117) of the second filter chamber (107) and the first control port (109c) of the valve control member (109) providing a fluid connection there between.

7. The filter arrangement (100) according to claim 6, wherein the first fluid line (118) is in fluid communication with the second fluid control line (114), and wherein the second fluid line (119) is in fluid communication with the first fluid control line (111), wherein a second non-return valve (120) is provided in the second fluid line (119), said second non-return valve (120) prohibiting fluid flow from the valve control member (109) towards the outlet (117) of the second filter chamber (107).

8. The filter arrangement (100) according to claim 6 or 7, wherein a second expansion valve (122) is provided in the second fluid line (119), preferably upstream of said second non-return valve (120) provided in said and second fluid line (119).

9. The filter arrangement (100) according to one of claims 6-8, wherein a second expansion valve (115b) is provided in said second fluid control line (114) between the valve control member (109) and said second valve (108).

10. The filter arrangement (100) according to claim 9, wherein the first (115a) and second (115b) expansion valve are each arranged downstream of a junction (150, 160) in said first respectively second fluid control line (114, 111) in a branch line (114a, 111a) that provides a fluid connection between said junction (160, 150) and said first and second valves (106, 108) respectively.

11. The filter arrangement (100) according to one of claims 6-11, wherein the second valve (106, 108) is a cartridge valve.

12. The filter arrangement (100) according to one of claims 6-11, wherein the first and second valve (106, 108) are arranged on a common support, preferably adjacent to each other.

13. The filter arrangement (200) according to one of the proceeding claims, wherein the valve control member (209) is one of a manual control member and an electronic control member.

14. The filter arrangement (200) according to one of the proceeding claims, wherein the reservoir (213) is maintained at a pressure that is substantially equal to atmospheric pressure.

## Patentansprüche

1. Filteranordnung (100; 200), mit:
• einem Einlass (104; 204) und einem Auslass (105; 205);
• einer ersten Filterkammer (103; 203), die zwischen dem Einlass (104; 204) und dem Auslass (105; 205) angeordnet ist und in welche ein erstes Filterelement (F) einsetzbar ist;
• einem ersten Ventil (106; 206), das zwischen dem Einlass (104; 204) und der ersten Filterkammer (103; 203) angeordnet ist, wobei das erste Ventil (106; 206) bewegbar ist zwischen einer geschlossenen Position, in welcher der Fluidfluss von dem Einlass (104; 204) zur ersten Filterkammer (103; 203) unterbrochen ist, und einer offenen Position, die eine Fluidverbindung zwischen dem Einlass (104; 204) und der ersten Filterkammer (103; 203) bereitstellt, und
• einem Ventil-Steuerelement (109; 209) mit einem Einlassport (109a; 209a), einem Auslassport (109b; 209b), einem ersten Steuerport (109c; 209c) und einem zweiten Steuerport (109d; 209d), wobei das Ventil-Steuerelement (109; 209) positionierbar ist in einer ersten Position, welche eine erste Fluidverbindung zwischen dem Einlassport (109a; 209a) und dem ersten Steuerport (109c; 209c) und zwischen dem Auslassport (109b; 209b) und dem zweiten Steuerport (109d; 209d) bereitstellt, und in einer zweiten Position, welche eine Fluidverbindung zwischen dem Einlassport (109a; 209a) und dem zweiten Steuerport (109d; 209d) und zwischen dem Auslassport (109b; 209b) und dem ersten Steuerport (109c; 209c) bereitstellt;
• einer Steuerung-Fluideinlassleitung (104c, 204c), welche eine Fluidverbindung zwischen dem Einlass (104; 204) und dem Einlassport (109a; 209a) des Ventil-Steuerelements (109; 209) bereitstellt;
• einer Steuenmg-Fluidauslassleitung (113; 213a), welche eine Fluidverbindung zwischen dem Auslassport (109b; 209b) und einem Niederdruckreservoir (113; 213) für ein Fluid bereitstellt, und
• einer ersten Fluidsteuerleitung (111; 211), welche eine Fluidverbindung zwischen dem ersten Steuerport (109c; 209c) und einer Steuerseite (110; 210) des ersten Ventils (106; 206) bereitstellt, und
wobei die Filteranordnung ferner eine erste Fluidleitung (118; 218) umfasst, welche zwischen einem Auslass (116; 216) der ersten Filterkammer (103; 203) und dem zweiten Steuerport (109d; 209d) des Ventil-Steuerelements (109; 209) vorgesehen ist und eine Fluidverbindung dazwischen bereitstellt.

2. Filteranordnung (100; 200) nach Anspruch 1, in welcher ein erstes Rückschlagventil (121; 221) in der ersten Fluidleitung (218) vorgesehen ist, wobei das erste Rückschlagventil (121; 221) den Fluidfluss vom Ventil-Steuerelement (109; 209) in Richtung des Auslasses (116; 216) der ersten Filterkammer (103; 203) unterbindet.

3. Filteranordnung (100; 200) nach Anspruch 1 oder 2, in welchem ein erstes Expansionsventil (123; 223) in der ersten Fluidleitung (118; 218) vorgesehen ist, vorzugsweise stromaufwärts des ersten Rückschlagventils (121; 221) in der Fluidleitung (118; 218).

4. Filteranordnung (200) nach einem der vorstehenden Ansprüche, in welcher ein erstes Expansionsventil (115a; 215) zwischen dem Ventil-Steuerelement (209) und dem ersten Ventil (106; 206) in der ersten Fluid-Steuerleitung (111; 211) vorgesehen ist.

5. Filteranordnung (200) nach einem der vorstehenden Ansprüche, in welcher das erste Ventil (106; 206) ein Kartuschenventil ist.

6. Filteranordnung (100) nach einem der vorstehenden Ansprüche, mit:
• einem ersten Strömungskreislauf (101);
• einem zweiten Strömungskreislauf (102), der parallel zu dem ersten Strömungskreislauf (101) angeordnet ist;
wobei der Einlass (104) und der Auslass (105) in Fluidkommunikation mit dem ersten (101) und zweiten Strömungskreislauf (102) stehen,
wobei der erste Strömungskreislauf (101) umfasst:
• die erste Filterkammer (103);
• das erste Ventil (106),
wobei der zweite Strömungskreislauf auf (102) umfasst:
• eine zweite Filterkammer (107), die zwischen dem Einlass (104) und dem Auslass (105) angeordnet ist und in welche ein zweites Filterelement (F) einsetzbar ist;
• ein zweites Ventil (108), dass zwischen der zweiten Filterkammer (107) und dem Einlass (104) angeordnet ist, wobei das zweite Ventil (108) bewegbar ist zwischen einer geschlossenen Position, in welcher der Fluidstrom vom Einlass zur zweiten Filterkammer (107) blockiert ist, und einer offenen Position, welche eine Fluidverbindung zwischen dem Einlass und der zweiten Filterkammer (107) bereitstellt,
wobei die Anordnung ferner umfasst:
• eine zweite Fluid-Steuerleitung (114), welche eine Fluidverbindung zwischen dem zweiten Steuerport (109d) und einer Steuerseite (112) des zweiten Ventils (108) bereitstellt, und
• eine zweite Fluid Leitung (119), welche zwischen einem Auslass (117) der zweiten Filterkammer (107) und dem ersten Steuerport (109c) der Ventil-Steuerkammer (109) vorgesehen ist und eine Fluidverbindung dazwischen herstellt.

7. Filteranordnung (100) nach Anspruch 6, in welcher die erste Fluidleitung (118) in Fluidkommunikation mit der zweiten Fluid-Steuerleitung (114) steht und in welcher die zweite Fluidleitung (119) in Fluidkommunikation mit der ersten Fluid-Steuerleitung (111) steht, wobei ein zweites Rückschlagventil (120) in der zweiten Fluidleitung (119) vorgesehen ist, wobei das zweite Rückschlagventil (120) einen Fluidfluss von der Ventil-Steuerkammer (109) in Richtung des Auslasses (117) der zweiten Filterkammer (107) unterbindet.

8. Filteranordnung (100) nach Anspruch 6 oder 7, in welcher ein zweites Expansionsventil (122) in der zweiten Fluidleitung (119) vorgesehen ist, vorzugsweise stromaufwärts des zweiten Rückschlagventils (120), das in der zweiten Fluidleitung (119) vorgesehen ist.

9. Filteranordnung (100) nach einem der Ansprüche 6-8, in welcher ein zweites Expansionsventil (115b) in der zweiten Fluid-Steuerleitung (114) zwischen dem Ventil-Steuerelement (109) und dem zweiten Ventil (108) vorgesehen ist.

10. Filteranordnung (100) nach Anspruch 9, in welcher sich das erste (115a) und das zweite (115b) Expansionsventil jeweils stromabwärts einer Kreuzung (150, 160) in der ersten bzw. zweiten Fluid-Steuerleitung (114, 111) befinden, in einem Leitungszweig (114a, 111a), der eine Fluidverbindung zwischen der Kreuzung (16 0,150) und dem ersten bzw. zweiten Ventil (10 6, 108) bereitstellt.

11. Filteranordnung (100) nach einem der Ansprüche 6-10, in welcher das zweite Ventil (106, 108) ein Kartuschenventil ist.

12. Filteranordnung (100) nach einem der Ansprüche 6-11, in welchem das erste und zweite Ventil (106,108) auf einem gemeinsamen Träger angeordnet sind, vorzugsweise angrenzend aneinander.

13. Filteranordnung (200) nach einem der vorstehenden Ansprüche, in welche das Ventil-Steuerelement (209) ein manuelles Steuerelement oder ein elektronisches Steuerelement ist.

14. Filteranordnung (200) nach einem der vorstehenden Ansprüche, in welcher das Reservoir (213) auf einem Druck gehalten wird, der im Wesentlichen gleich dem Atmosphärendruck ist.

## Revendications

1. Dispositif de filtre (100; 200) comprenant:
• une entrée (104; 204) et une sortie (105; 205);
• une première chambre de filtre (103; 203) positionnée entre l'entrée (104; 204) et la sortie (105; 205), et dans laquelle un premier élément de filtre (F) peut être inséré;
• une première valve (106; 206) positionnée entre l'entrée (104; 204) et la première chambre de filtre (103; 203), la première valve (106; 206) étant mobile entre une position fermée dans laquelle l'écoulement de fluide, de l'entrée (104; 204) à la première chambre de filtre (103; 203), est empêché et une position ouverte fournissant un raccordement de fluide entre l'entrée (104; 204) et la première chambre de filtre (103; 203), et
• un élément de commande de valve (109; 209) comprenant un orifice d'entrée (109a; 209a), un orifice de sortie (109b; 209b), un premier orifice de commande (109c; 209c) et un second orifice de commande (109d; 209d), l'élément de commande de valve (109; 209) pouvant être positionné dans une première position fournissant un raccordement de fluide entre l'orifice d'entrée (109a; 209a) et le premier orifice de commande (109c; 209c) et entre l'orifice de sortie (109b; 209b) et le second orifice de commande (109d; 209d) et dans une seconde position fournissant un raccordement de fluide entre l'orifice d'entrée (109a; 209a) et le second orifice de commande (109d; 209d) et entre l'orifice de sortie (109b; 209b) et le premier orifice de commande (109c; 209c) ;
• une conduite d'entrée de fluide de commande (104c; 204c) fournissant un raccordement de fluide entre l'entrée (104; 204) et l'orifice d'entrée (109a; 209a) de l'élément de commande de valve (109; 209);
• une conduite de sortie de fluide de commande (113; 213a) fournissant un raccordement de fluide entre l'orifice de sortie (109b; 209b) et un réservoir de basse pression (113; 213) pour le fluide, et
• une première conduite de commande de fluide (111; 211) fournissant un raccordement de fluide entre le premier orifice de commande (109c; 209c) et un côté de commande (110; 210) de la première valve (106; 206), et
dans lequel le dispositif de filtre comprend en outre une première conduite de fluide (118; 218) prévue entre une sortie (116; 216) de la première chambre de filtre (103; 203) et le second orifice de commande (109d; 209d) de l'élément de commande de valve (109; 209), fournissant un raccordement de fluide entre eux.

2. Dispositif de filtre (100; 200) selon la revendication 1, dans lequel une première valve anti-retour (121; 221) est prévue dans la première conduite de fluide (218), ladite première valve anti-retour (121; 221) empêchant l'écoulement de fluide de l'élément de commande de valve (109; 209) vers la sortie (116; 216) de la première chambre de filtre (103; 203).

3. Dispositif de filtre (100; 200) selon la revendication 1 ou 2, dans lequel une première valve d'expansion (123; 223) est prévue dans la première conduite de fluide (118; 218), de préférence en amont de ladite première valve anti-retour (121; 221) dans la première conduite de fluide (118; 218).

4. Dispositif de filtre (200) selon l'une des revendications précédentes, dans lequel une première valve d'expansion (115a; 215) est prévue entre l'élément de commande de valve (209) et la première valve (106; 206) dans ladite première conduite de commande de fluide (111; 211).

5. Dispositif de filtre (200) selon l'une des revendications précédentes, dans lequel la première valve (106; 206) est une valve de cartouche.

6. Dispositif de filtre (100) selon l'une des revendications précédentes, comprenant :
• un premier circuit d'écoulement (101);
• un second circuit d'écoulement (102) agencé en parallèle avec le premier circuit d'écoulement (101);
dans lequel l'entrée (104) et la sortie (105) sont en communication de fluide avec le premier (101) et le second circuit d'écoulement (102),
le premier circuit d'écoulement (101) comprenant :
• ladite première chambre de filtre (103);
• ladite première valve (106),
le second circuit d'écoulement (102) comprenant :
• une seconde chambre de filtre (107) positionnée entre l'entrée (104) et la sortie (105), et dans laquelle un second élément de filtre (F) peut être inséré;
• une seconde valve (108) positionnée entre la seconde chambre de filtre (107) et l'entrée (104), la seconde valve (108) étant mobile entre une position fermée dans laquelle l'écoulement de fluide de l'entrée à la seconde chambre de filtre (107) est empêché et une position ouverte fournissant un raccordement de fluide entre l'entrée et la seconde chambre de filtre (107),
dans lequel l'agencement comprend en outre :
• une seconde conduite de commande de fluide (114) fournissant un raccordement de fluide entre le second orifice de commande (109d) et un côté de commande (112) de la seconde valve (108), et
• une seconde conduite de fluide (119) prévue entre une sortie (117) de la seconde chambre de filtre (107) et le premier orifice de commande (109c) de l'élément de commande de valve (109) fournissant un raccordement de fluide entre eux.

7. Dispositif de filtre (100) selon la revendication 6, dans lequel la première conduite de fluide (118) est en communication de fluide avec la seconde conduite de commande de fluide (114) et dans lequel la seconde conduite de fluide (119) est en communication de fluide avec la première conduite de commande de fluide (111), dans lequel une seconde valve anti-retour (120) est prévue dans la seconde conduite de fluide (119), ladite seconde valve anti-retour (120) empêchant l'écoulement de fluide de l'élément de commande de valve (109) vers la sortie (117) de la seconde chambre de filtre (107).

8. Dispositif de filtre (100) selon la revendication 6 ou 7, dans lequel une seconde valve d'expansion (122) est prévue dans la seconde conduite de fluide (119), de préférence en amont de ladite seconde valve anti-retour (120) prévue dans ladite seconde conduite de fluide (119).

9. Dispositif de filtre (100) selon l'une quelconque des revendications 6 à 8, dans lequel une seconde valve d'expansion (115b) est prévue dans ladite seconde conduite de commande de fluide (114) entre l'élément de commande de valve (109) et ladite seconde valve (108).

10. Dispositif de filtre (100) selon la revendication 9, dans lequel la première (115a) et la seconde (115b) valve d'expansion sont chacune agencées en aval d'une jonction (150, 160) dans lesdites première, respectivement seconde conduites de commande de fluide (114, 111) dans une conduite de bifurcation (114a, 111a) qui fournit un raccordement de fluide entre ladite jonction (160, 150) et lesdites première et seconde valves (106, 108) respectivement.

11. Dispositif de filtre (100) selon l'une des revendications 6 à 10, dans lequel la seconde valve (106, 108) est une valve de cartouche.

12. Dispositif de filtre (100) selon l'une des revendications 6 à 11, dans lequel la première et la seconde valve (106, 108) sont agencées sur un support commun, de préférence adjacentes entre elles.

13. Dispositif de filtre (200) selon l'une des revendications précédentes, dans lequel l'élément de commande de valve (209) est l'un parmi un élément de commande manuel et un élément de commande électronique.

14. Dispositif de filtre (200) selon l'une des revendications précédentes, dans lequel le réservoir (213) est maintenu à une pression qui est sensiblement égale à la pression atmosphérique.
